# EUROPEAN PATENT APPLICATION

(11) **EP 2 056 202 A1**
(43) Date of publication of application: **06.05.2009**
(21) Application number: 07021283.2
(22) Date of filing: 31.10.2007
(51) Int. Cl.: G06F 11/36

(54) **Method for testing of a COM interface**

(71) Applicant: SIEMENS AKTIENGESELLSCHAFT, 80333 München (DE)
(72) Inventor: Costagli, Marco, 16035 Rapallo (IT)
(74) Representative: Fischer, Michael

(57) **Abstract**

Method for testing a COM interface, comprising the steps of reading at least one public method of a type library associated with the COM interface, extracting all properties of the at least one public method, transforming property data from numeric format into a human-readable format, allowing a user to define values of input parameters contained in the properties of the at least one public method, performing test procedures based on contents of the at least one public method depending on the said input parameters, interpreting results of the said test procedures. The presented invention has the important advantage that it simplifies the testing of a COM interface with an all-in-one data retrieving, data changing and testing solution.

## Description

The invention relates to a method for testing of a COM Interface, especially by reading an associated Type Library of the said COM interface. The term COM denotes the platform technology developed by Microsoft, called Component Object Model.

During the development phase of a COM interface it is necessary to verify the correct functionality of the methods comprised in the COM interface in terms of passed parameters, return values, execution time, etc. Current solutions provide means to retrieve information about the public methods contained in the COM interface. However, a major drawback is that these state of the art solutions provide no means for changing properties or parameters associated to a public method. Consequently, a developer has no possibility to alter the COM interface functionality in order to evaluate its behaviour. In order to overcome this drawback, a developer has to additionally provide means which allow accomplishing the said task of altering the COM interface functionality, these means consisting for example in programming Visual Basic routines which allow communication and data exchange with the COM interface. This fact renders the development of the COM interface time consuming, error prone and reserved to skilled developers who possess additional knowledge than required by the main development task.

One goal to be achieved is to be seen in providing a solution comprising both the retrieval of COM library information and a technical infrastructure allowing the altering and testing of the COM interface without overhead development effort. One way the goal is achieved is by providing a method for testing a COM interface, comprising the steps of
a) reading a plurality of public methods of a type library associated with the COM interface,
b) selecting at least one public method at user side,
c) extracting all properties of the user-selected public method,
d) transforming property data from numeric format into a human-readable format,
e) allowing the user to define values of input parameters contained in the properties of said user selected public method,
f) performing test procedures based on contents of the user-selected public method depending on the said input parameters,
g) interpreting results of the said test procedures.

The most important advantage of the proposed method lies in the simplicity of testing a COM interface with an all-in-one data retrieving, data changing and testing solution which takes away from the developer the burden of overhead development. Furthermore, no additional programming skills are required from the developer. Yet another advantage is the fact the developer saves time by dealing with decoded, human-readable data. This advantage comes from step d) of the invention, meaning that the proposed method is able to decode the data contained in the type library, which has a specific binary (machine code) format and provide the information in a structured, readable way.

In the following, the user-selected public method mentioned above is to be understood as a function, for example a software function comprising at least one execution step optionally being provided with input parameters and yielding a result. Furthermore, the term properties mentioned in step b) refers to the totality of input parameters, for example variable, constant, etc. and the results of a public method, as well as types of input parameters and results, for example integer, Boolean, etc.

According to a preferred method, the steps a) to g) are carried out by means of software code. This advantageously simplifies the implementation effort of the present invention.

According to a preferred method, the test procedures for the user-selected public method are performed independently of related public methods. This advantageously renders the invention flexible in terms of local and selective ability to perform test procedures for certain particular parts of the COM interface, for example in case input parameters for a given public function are defined directly by the user, even if in a normal execution of code these input parameters would be provided by another public method. In other words, the need for a sequential execution of all related methods in an execution path is avoided.

According to a preferred method, the step of performing the test procedures is carried out concurrently for multiple public methods. This advantageously allows an evaluation of the COM interface in terms of detecting possible collisions when executing multiple public methods at the same time, in other words determining a degree of parallelism featured by the COM interface.

According to a preferred method, the step of performing the test procedures applied to the user-selected public method is extended by insertion of a user defined delay of execution, which is placed between the execution of the user-selected public method and the execution of a second public method. Another advantage of the present invention lies in the ability to test functionality scenarios wherein there is a dependency of public methods on one another, thus requiring waiting states for a certain public method until parameters needed in the said public method are available, then resuming the execution of the said public method.

According to a preferred method, the step of performing the test procedures is carried out for multiple public methods in a user defined order of methods and procedures. This preferably makes it possible to test different setups of complex functionalities of the COM interface. By variating the order of execution of multiple public methods, the developer is able to find an optimum setup, for example in terms of execution speed.

According to a preferred method, the test procedures applied to the user-selected public method are repeated a number of times defined by the user. This advantageously makes it possible to verify the robustness of a public method by repeatedly checking the consistency of execution results.
Altogether, the possibilities of adding delays, loops and the ability to execute multiple public methods in parallel allow the evaluation of the COM interface in terms of degree of parallelism, detection of deadlocks, memory leaks and CPU load.

According to a preferred method, the type library associated with the COM interface is retrieved by the software code based on its interface identification number (IID). This advantageously prevents the retrieval of wrong type libraries due to for example name ambiguities, by searching the IID associated with a specific type library, the IID being a unique number, different for each type library.

According to a preferred method, the performance of at least one test procedure is measured in terms of duration. This advantageously allows the evaluation of the COM interface in terms of effectiveness of the public methods to be tested, especially with the goal of optimizing the public method with respect to a minimal required CPU load.

According to a preferred method, a graphical user interface comprises means for listing the totality of public methods of the type library associated with the COM interface. According to a preferred method, the graphical user interface further comprises means for adjustment of test parameters. According to a preferred method, the graphical user interface further comprises means for output of test results.

The usage of a graphical user interface, the possibility for adjustment of parameters and the means for output of test results advantageously make the handling of test procedures easy to manage, such that direct evaluation can be performed given all properties of a public method and all results yielded by the variation of the said properties.

According to a preferred method, the graphical user interface further comprises means for designing test scenarios comprising multiple, connected public methods. This advantageously gives a developer a high level of flexibility by allowing the interconnection of public methods in multiple ways, thus making it possible to test different functionality scenarios.

According to a preferred method, properties of the user-selected public method comprise multidimensional arrays. This feature gives a developer the possibility to test more complicated COM interfaces, wherein multidimensional arrays of values are present, the term multidimensional referring to the possibility to store data sets characterized by multiple independent parameters like for example position values x, y, z of a given point in a three-dimensional coordinate system.

According to a preferred method, a program is used for defining and arranging values to be inserted in the multidimensional array. This advantageously automates the process of altering the array, making it easy to comprehend the structure of the said array and altering correct values at correct locations.

In a preferred embodiment of the invention, a module for implementing the method according to claims 1 to 14 is presented, comprising a software executable file. This advantageously makes possible an easy use of the described methods on a computer.

The described methods are further explained by the following examples and drawings, whereby:

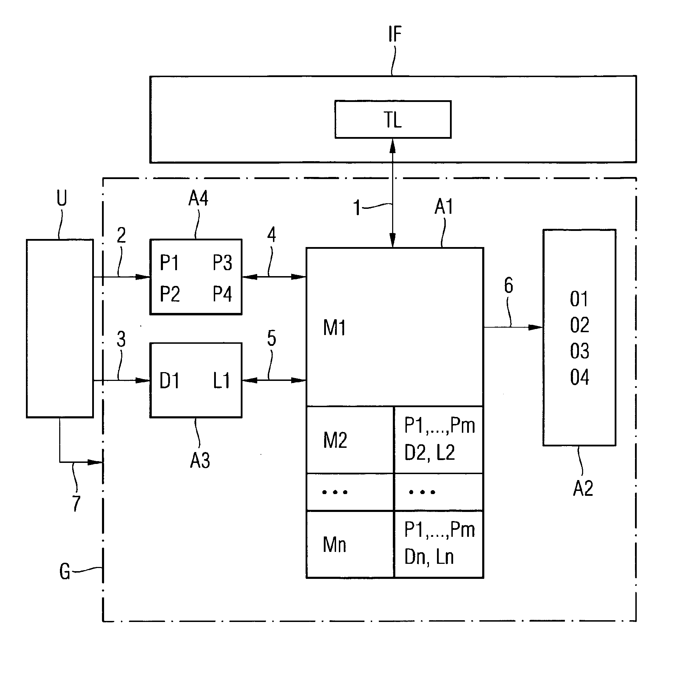

- Drawing 1: Example of an implementation of the COM testing method for one public method

Drawing 1 shows a setup of an implementation of the method for testing a COM Interface, comprising a module G for testing the COM interface IF and a user U. For clarity reasons, one public method is used in this example. For the same reasons, a program for defining and arranging values to be inserted into a multidimensional array is left out.
The module G for testing the COM interface is connected with the COM Interface IF via the two way communication path 1. By this communication path, G retrieves public method M1 from the type Library TL and stores it in the public method control means A1. G then retrieves all properties P1, P2, P3, P4 of the public method M1 and stores them in the property control means A4. G further comprises delay and loop control means A3, which features a delay control D1 and a loop control L1. Another component of G is an output means A2 which contains the output results 01, 02, 03, 04. A1 is connected to A4 by a two way communication path 4 serving for the exchange of property data between A1 and A4. A1 is connected to A3 by a two way communication path 5 serving for the exchange of delay and loop data between A1 and A4. A1 is connected to A2 by a one way communication path 6 in order to send the output results to A2. The User U is connected to G by a one way communication path 7, allowing U to trigger test procedures for the public method M1. Furthermore user U is connected by a one way communication path 2 to A4, giving U the possibility to adjust any of the properties P1 to P4 of the public method M1. U is furthermore connected to A3 by another one way communication path 3, allowing U to adjust the delay control D1 and the loop control L1.

### List of Abbreviations

- IF: = COM Interface
- TL: = Type Library
- A1: = Public method control means
- A2: = Output means
- A3: = Delay and loop control means
- A4: = Property control means
- U: = User
- G: = Module for testing a COM interface
- D1: = Delay control
- L1: = Loop control
- P1: = Property 1
- P2: = Property 2
- P3: = Property 3
- P4: = Property 4
- M1: = Public method 1
- 01: = Output result 1
- 02: = Output result 2
- 03: = Output result 3
- 04: = Output result 4
- 1: = 2-way communication path between IF and G
- 2: = one way communication path between U and A4
- 3: = one way communication path between U and A3
- 4: = 2 way communication between A1 and A4
- 5: = 2 way communication between A1 and A3
- 6: = one way communication between A1 and A2
- 7: = one way communication path between U and G

## Claims

1. Method for testing a COM interface (IF), comprising the steps of
a) reading a plurality of public methods (M1, ..., Mn) of a type library (TL) associated with the COM interface (IF),
b) selecting at least one public method (M1) at user side,
c) extracting all properties (P1,...,Pm) of the user-selected public method (M1),
d) transforming property data from numeric format into a human-readable format,
e) allowing the user to define values of input parameters contained in the properties (P1,...,P4) of said user selected public method (M1),
f) performing test procedures based on contents of the user-selected public method depending on the said input parameters,
g) interpreting results of the said test procedures.

2. Method according to claim 1, whereby the steps a) to
g) are carried out by means of software code.

3. Method according to claims 1 or 2, whereby the test procedures for the user-selected public method are performed independently of related public methods.

4. Method according to one of the preceding claims, whereby the step of performing the test procedures is carried out concurrently for multiple public methods.

5. Method according to one of the preceding claims, whereby the step of performing the test procedures applied to the user-selected public method is extended by insertion of a user defined delay of execution, which is placed between the execution of the user-selected public method and the execution of a second public method.

6. Method according to one of the preceding claims, whereby the step of performing the test procedures is carried out for multiple public methods in a user defined order of methods and procedures.

7. Method according to one of the preceding claims, whereby the test procedures applied to the user-selected public method are repeated a number of times defined by the user.

8. Method according to one of the preceding claims, whereby the type library associated with the COM interface is retrieved by a software code by searching an interface identification number (IID) of the COM interface.

9. Method according to one of the preceding claims, whereby the performance of at least one test procedure is measured in terms of duration.

10. Method according to one of the preceding claims, whereby a graphical user interface comprises means for listing the totality of public methods of the type library (TL) associated with the COM interface (IF) .

11. Method according to claim 10, whereby the graphical user interface further comprises means for adjustment of test parameters.

12. Method according to claim 10, whereby the graphical user interface further comprises means for output of test results.

13. Method according to claim 10, whereby the graphical user interface further comprises means for designing test scenarios comprising multiple, connected public methods.

14. Method according to one of the preceding claims, whereby properties of the user-selected public method comprise multidimensional arrays.

15. Method according to claim 14, whereby a program is used for defining and arranging values to be inserted in the multidimensional array.

16. Module for implementing the method according to claims 1 to 15, comprising a software executable file.
